(19) Europäisches Patentamt
European Patent Office
Office européen des brevets

(11) Numéro de publication: 0 233 121 B1

# (12) FASCICULE DE BREVET EUROPEEN

(45) Date de publication du fascicule du brevet: 14.11.90

(51) Int. Cl.[5]: C22B 59/00, C01F 17/00, C22B 3/38

(21) Numéro de dépôt: 87400276.9

(22) Date de dépôt: 06.02.87

(54) **Procédé d'élimination du plomb de terres rares.**

(30) Priorité: 14.02.86 FR 8602006

(43) Date de publication de la demande: 19.08.87 Bulletin 87/34

(45) Mention de la délivrance du brevet: 14.11.90 Bulletin 90/46

(84) Etats contractants désignés: AT DE FR

(56) Documents cités:
EP-A- 0 021 990
EP-A- 0 108 015
EP-A- 0 116 483
FR-A- 2 390 383
FR-A- 2 460 275
US-A- 3 110 556
US-A- 3 230 036
US-A- 3 378 352
US-A- 3 615 171

CHEMICAL ABSTRACTS, vol. 91, 1979, résumé no. 77365j, Columbus, Ohio, US; & JP-A-79 38 273 (DAIHACHI CHEMICAL INDUSTRY CO., LTD) 22.03.1979
CHEMICAL ABSTRACTS, vol. 92, 1980, page 235, résumé no. 62442d, Columbus,

(73) Titulaire: RHONE-POULENC CHIMIE, 25, quai Paul Doumer, F-92408 Courbevoie Cédex(FR)

(72) Inventeur: Rollat, Alain, 3bis, rue Treich-Laplene, F-17000 La Rochelle(FR)
Inventeur: Sabot, Jean-Louis, 3, avenue Pascal, F-78600 Maisons Laffitte(FR)

(74) Mandataire: Dutruc-Rosset, Marie-Claude et al, RHONE-POULENC INTERSERVICES Service Brevets Chimie 25, Quai Paul Doumer, F-92408 Courbevoie Cédex(FR)

(56) Documents cités: (suite)
Ohio, US; & JP-A-79 93 672 (DAIHACHI CHEMICAL INDUSTRY CO., LTD) 24.07.1979
PATENT ABSTRACTS OF JAPAN, vol. 7, no. 181 (C-180)[1326], 10 août 1983; & JP-A-58 84 118 (MITSUBISHI KASEI KOGYO K.K.) 20-05-1983

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

EP 0 233 121 B1

ACTORUM AG

## Description

La présente invention concerne un procédé d'élimination du plomb de terres rares. Elle concerne plus particulièrement un procédé d'élimination du plomb de chlorures de terres rares en solution aqueuse.

Dans les procédés industriels d'obtention de terres rares par traitement d'un minerai de terres rares pour obtenir un mélange d'hydroxydes de terres rares, reprise des hydroxydes en milieu acide et séparation ultérieure des différentes terres rares, le plomb constitue un élément que l'on retrouve en fin de séparation avec au moins l'une des terres rares considérées.

Il est connu que l'élimination du plomb peut être effectuée lors du traitement des terres rares sous forme de clorures, par addition de sulfures alcalins ou d'hydrogène sulfuré à une solution aqueuse des chlorures afin de précipiter le plomb sous forme de sulfure. La précipitation est lente et l'élimination est incomplète.

Dans JP-A-58 185729, on a proposé d'améliorer ce procédé par addition d'hydrazine ou d'hydroxylamine. On conserve toutefois les inconvénients liés à l'utilisation des sulfures.

La présente invention vise à fournir un nouveau procédé qui permet l'élimination du plomb conduisant alors à des terres rares plus pures.

A cet effet, la présente invention a pour objet un procédé d'élimination du plomb de terres rares sous forme de chlorures, en solution aqueuse, caractérisé par le fait qu'il consiste :

- à effectuer une extraction liquide-liquide entre une phase aqueuse contenant au moins une terre rare et le plomb sous forme de chlorures et une phase organique contenant un agent d'extraction qui est constitué par un monoester phosphonique répondant à la formule (I):

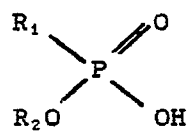

(I)

dans laquelle les groupes $R_1$ et $R_2$, identiques ou différents, sont des groupes alkyle linéaires, ramifiés ou cycliques contenant de 4 à 20 atomes de carbone,
la phase aqueuse mise en contact avec la phase organique ayant au moment de l'extraction, une concentration en ions chlorure d'au moins 2 moles/litre et un pH supérieur ou égal à 2 et inférieur ou égal à 4,
- à récupérer ensuite la ou les terres rares de la phase organique, le plomb restant dans la phase aqueuse de départ.

Dans la présente invention, on désigne par terres rares les éléments appelés lanthanides ayant des numéros atomiques de 57 à 71 inclus et l'yttrium de numéro atomique égal à 39.

L'agent d'extraction est avantageusement un composé de formule (I) dans laquelle $R_1$ et $R_2$ sont des groupes alkyle contenant 8 atomes de carbone notamment le monoester éthyl-2 hexylique de l'acide éthyl-2 hexylphosphonique, le monoester éthyl-2 hexylique de l'acide n-octylphosphonique, le monoester -octylique de l'acide éthyl-2 hexylique, le monoester n-octylique de l'acide n-octylphosphonique.
Ces esters ont déjà été proposés comme agent d'extraction des lanthanides (Peppard et coll. notamment dans J. Inorg. Nucl. Chem. 1965, 27, 2065). Toutefois leur utilisation pour l'élimination du plomb selon un procédé d'extraction liquide-liquide n'a pas été jusqu'à présent envisagée.

La phase aqueuse que l'on met en contact avec l'agent d'extraction peut être constituée par une solution aqueuse provenant de la redissolution par l''acide chlorhydrique, des hydroxydes obtenus à la suite de l'attaque sodique des minerais contenant les terres rares tels que la monazite, la bastnaesite et le xénotime. On peut également mettre en oeuvre toute autre solution de sel de terres rares après changement de l'anion présent en anion chlorure.

Cette solution peut également avoir subi une épuration préalable, par exemple une élimination du thorium selon des procédés connus. On peut également utiliser comme solution aqueuse, la solution de terres cériques telles que lanthane, cérium, prasiodyme, néodyme résultant d'une première séparation des terres rares entre elles.

Le procédé de l'invention s'applique au solutions telles quelles ou bien après leur avoir fait subir une concentration préalable.

Généralement, on met en oeuvre le procédé d'extraction liquide-liquide sur des solutions aqueuses de chlorures de terres rares ayant une concentration exprimée en oxydes de terres rares variant entre 20 g/l et 500 g/l : les bornes données ne présentant aucun caractère critique. D'une manière préférentielle, elles ont une concentration comprise entre 50 g/l et 200 g/l.

Elles présentent une acidité variant généralement entre 0,01 N et 3,0 N.

La phase organique selon le procédé de l'invention contient éventuellement outre l'agent d'extraction, un diluant organique. Comme diluants susceptibles d'être utilisés, on peut mettre en oeuvre ceux habituellement mis en oeuvre pour réaliser des opérations d'extraction liquide-liquide. Parmi ceux-ci, on peut citer les hydrocarbures aliphatiques comme par exemple, l'hexane, l'heptane, le dodécane et les coupes pétrolières du type kérosène : les hydrocarbures aromatiques comme par exemple, le benzène, le tolué-

ne, l'éthylbenzène, le xylène et les coupes pétrolières constituées de mélange d'alkylbenzènes notamment les coupes du type Solvesso commercialisées par la Société EXXON et enfin les dérivés halogénés comme, par exemple, le chloroforme et le tétrachlorure de carbone.
On peut également utiliser un mélange de ces diluants.

La concentration de l'agent d'extraction dans la phase organique n'est pas un facteur critique selon l'invention et peut varier dans de larges limites. Elle peut varier de 5 % du volume de la phase organique lorsque l'agent d'extraction est en solution dans un diluant jusqu'à environ 100 % lorsque l'agent d'extraction est utilisé pur.

Lorsque l'agent d'extraction utilisé est le monoester éthyl-2 hexylique de l'acide éthyl-2 hexylphosphonique qui constitue un agent d'extraction choisi préférentiellement, la concentration de celui-ci dans la phase organique est avantageusement de 0,5 à 3 moles/litre et de préférence 1 à 2 moles/litre.

La phase organique selon le procédé de l'invention peut également contenir divers agents modifieurs dont un des buts essentiels est d'améliorer les propriétés hydrodynamiques du système sans trop altérer les propriétés complexantes du composé organophosphonique. Parmi les composés convenant bien, ou peut citer notamment, les composés à fonction alcool et, en particulier, les alcools lourds dont le nombre d'atomes de carbone est compris entre 4 et 15 et les phénols lourds, ainsi que divers autres composés tels que les esters phosphoriques comme le tri-butylphosphate, les esters phosphoniques comme les dialkylalkylphosphonates par exemple, le dibutylbutylphosphonate ou le bis(éthyl-2 hexyl) éthyl-2 hexylphosphonate, les oxydes de phosphine ou les sulfoxydes. Une proportion comprise entre 3 et 20 % en volume rapportée à la phase organique est généralement favorable.

Dans le choix des conditions d'extraction la concentration en ions hydrogène $H^+$ et la concentration en ions chlorure dans la phase aqueuse sont importantes.

Pour que l'extraction soit satisfaisante, la phase aqueuse en contact avec la phase organique au moment de l'extraction doit présenter une concentration en ions chlorure d'au moins 2 moles/litre et en pH supérieur ou égal à 2 et inférieur ou égal à 4.

La phase aqueuse doit contenir une concentration en ions chlorure d'au moins 2 moles/litre et choisie avantageusement entre 2 et 4 moles/litre. Dans le cas où la concentration en ions chlorure de la phase aqueuse est insuffisant, il peu être envisagé d'apporter des ions chlorure par addition d'acide chlorhydrique ou d'un sel sous forme chlorure notamment le chlorure d'ammonium qui peut être apporté sous forme solide ou sous forme d'une solution aqueuse.

La quantité d'acide ou de sel à ajouter est déterminée de telle sorte que l'on obtienne la concentration en ions chlorure souhaitée. Lorsque l'on fait appel à des solutions aqueuses il est préférable bien que ce ne soit pas critique, de mettre en oeuvre des solutions concentrées afin de ne pas trop diluer la phase aqueuse.

Compte-tenu du fait que les solutions aqueuses de chlorures de terres rares de départ sont relativement acides, il est souvent nécessaire d'ajuster la concentration de la phase aqueuse en ions $H^+$ par addition d'une base alcaline qui peut être la soude ou l'ammoniaque.
On fait appel de préférence à une solution aqueuse d'ammoniaque diluée ou concentrée : sa concentration peut varier dans de larges limites entre 1 et 10 N mais il est préférable de mettre en oeuvre une solution concentrée d'ammoniaque.
La quantité de base alcaline à ajouter correspond sensiblement à la quantitié stoechiométrique des terres rares que l'on souhaite extraire dans la phase organique additionnée de la quantité de base nécessaire pour neutraliser l'acidité libre jusqu'à obtention du pH désiré qui doit être de 2 à 4 et avantageusement de 2,5 à 3,5.

Au cours de la phase d'extraction, on met en contact la phase organique et la phase aqueuse à une température qui ne présente aucun caractère critique : elle est choisie généralement entre 10°C et 50°C et est, le plus souvent, comprise entre la température ambiante et 40°C.

L'extraction peut être réalisée de manière classique par écoulements de préférence à contre-courant de la phase aqueuse et de la phase organique. Le nombre d'étages et les débits des deux phases sont déterminés selon des modes de calcul bien connus de l'homme de l'art.

Aprés l'étape d'extraction, il est parfois nécessaire de faire intervenir une étape de lavage afin d'éliminer le plomb qui peut être extrait dans la phase organique en faibles quantités.

Dans l'étape de lavage, la phase organique est lavée avec une solution aqueuse contenant des ions chlorure à une concentration d'au moins 1 mole/litre : la borne supérieure ne présente aucun caractère critique et n'est limitée que par la solubilité.
A cet effet, on peut faire appel à une solution répondant à cette concentration qui peut être une solution aqueuse d'acide chlorhydrique, une solution aqueuse d'un sel sous forme chlorure notamment le chlorure d'ammonium dont le pH est amené à une pH inférieur ou égal à 1 par addition d'acide, par exemple, chlorhydrique ou une solution aqueuse de chlorures de terres rares de même nature que les terres rares à extraire et constituée d'une fraction de la phase aqueuse obtenue dans l'opération suivante de contre-extraction des terres rares de la phase organique.

Cette opération peut être effectuée préférentiellement à contre-courant comme la précédente. Le nombre d'étages et les débits sont calculés pour éliminer pratiquement la totalité du plomb présent dans le phase organique.

Après les opérations d'extraction et de lavage suivies d'une séparation de la phase aqueuse et de la

phase organique, on effectue généralemet une étape de contre-extraction de terres rares contenues dans le solvant d'extraction.

On sépare les terres rares présentes dans la phase organique par mise en contact de cette dernière avec une solution aqueuse acide, notamment une solution d'acide chlorhydrique ayant une concentration pouvant aller de 0,5 N jusqu'à des concentrations très élevées telles que 10 N mais de préférence, 5 à 8 N.

La contre-extraction peut être effectuée à contre-courant comme les opérations précédentes. Le nombre d'étages et les débits sont déterminés selon des modes de calcul bien connus de l'homme de l'art.

Les terres rares extraites sont ainsi recueillies en solution aqueuse tandis que le solvant d'extraction peut être recyclé à l'étape d'extraction. Ce recyclage n'est pas essentiel dans la présente invention mais il est souhaitable pour des raisons économiques.

Les diverses étapes de mises en contact et de lavage peuvent être réalisées notamment dans des dispositifs classiques d'extraction liquide-liquide fonctionnant à contre-courant. De tels dispositifs comprennent généralement plusieurs étages de mélangeurs-décanteurs ou de colonnes garnies et/ou agitées, agencés pour réaliser des opérations d'extraction de lavage sélectif et de récupération des terres rares en phase aqueuse et de régéneration du solvant d'extraction.

Les exemples suivants sont donnés à titre indicatif et ne peuvent être considérés comme une limite du domaine et de l'esprit de l'invention.

Dans les exemples, les pourcentages donnés sont exprimés en poids.

EXEMPLE 1

On réalise cet exemple en suivant le mode de mise en oeuvre illustré par la figure 1.

L'appareillage utilisé pour la mise en oeuvre de l'invention comprend en série et à contre-courant :
- une section A d'extraction liquide-liquide constituée d'un mélangeur-décanteur
- une section B de lavage comportant 3 mélangeurs-décanteurs
- une section C de contre-extraction des terres rares constituée de 3 mélangeurs-décanteurs.

La solution aqueuse à traiter est une solution aqueuse de chlorures de terres rares ayant une concentration exprimée en oxydes de terres rares de 120 g/l. Elle contient également 0,5 % de plomb exprimé par rapport au poids d'oxydes de terres rares.

Sa concentration en ions chlorure est de 2,8 moles/litre et en ions $H^+$ de 0,5 mole/litre.

L'agent d'extraction utilisé est le monoester éthyl-2 hexylique de l'acide éthyl-2 hexylphosphonique. Il est mis en oeuvre sous sa forme commercialisée sous la marque PC 88 A.

Ledit agent d'extraction est mis en solution dans le kérosène à raison de 2 moles/litre et le mélange obtenu est appelé solvant d'extraction.

Avant de détailler les différentes opérations, on précisera que l'on choisit comme entrée et sortie des unités extraction - lavage - contre-extraction, le sens de circulation de la phase organique.

On introduit la solution aqueuse de terres rares à purifier en 1 dans la section A d'extraction à un débit de 1000 litres/heure.

On introduit parallèlement en 2, une solution aqueuse d'ammoniaque 10 N à un débit de 225 litres/heure. Cette addition permet de maintenir le pH de la solution aqueuse resultant à 3,2.

En entrée de la section A d'extraction, on introduit en 3 la phase organique constituée par le solvant d'extraction à un débit de 3000 litres/heure.

Ladite phase est ensuite envoyée dans la section B de lavage et l'on introduit en 4 à contre-courant, une solution aqueuse d'acide chlorhydrique 2,4 N à raison de 150 litres/heure.

La phase aqueuse séparée est envoyée dans la section A d'extraction où elle est ajoutée à la phase aqueuse qui est évacuée en 5, après extraction.

On introduit la phase organique provenant de la section B de lavage dans la section C de contre-extraction où l'on introduit en 6, à contre-courant, une solution aqueuse d'acide chlorhydrique 7 N à un débit de 360 litres/heure.

On recueille à l'entrée de la section C de contre-extraction, en 7, une solution aqueuse de chlorures de terres rares ayant une concentration exprimée en oxydes de terres rares de 350 g/l : les terres rares étant dosées par gravimétrie des oxydes résultant de la calcination des oxalates de terres precipités à partir de la solution aqueuse de chlorures de terres rares traitée à l'acide oxalique.

La teneur en plomb dans la solution aqueuse de chlorures de terres rares est inférieure a 0,001 %, limite de détection de la méthode de dosage à savoir la spectrométrie d'absorption atomique.

La phase organique régénérée est évacuée en 8 et est recyclée à la sortie de la section C de contre-extraction dans la section A d'extraction avec le même débit.

EXEMPLE 2

On réalise cet exemple en suivant le mode de mise en oeuvre illustré par la figure 1 et en partant d'une solution des chlorures de terres ayant les caractéristiques définies dans l'exemple 1.

On introduit la solution aqueuse de terres rares à purifier en 1 dans la section A d'extraction à un débit de 1000 litres/heure.

On Introduit parallèlement en 2, une solution aqueuse d'ammoniaque 10 N à un débit de 240 litres/heure. Cette addition permet de maintenir le pH de la solution aqueuse résultante à 3,2.

En entrée de la section A d'extraction, on introduit en 3 la phase organique constituée par le solvant d'extraction, le même que celui utilisé dans l'exemple 1, à un débit de 3000 litres/heure.

Ladite phase est ensuite envoyée dans la section B de lavage et l'on introduit en 4, à contre-courant une solution aqueuse d'acide chlorhydrique 1,0 N à raison de 180 litres/heure.

La phase aqueuse séparée est envoyée dans la section A d'extraction où elle est ajoutée à la phase aqueuse qui est évacuée en 5, après extraction.

On introduit la phase organique provenant de la section B de lavage dans la section C de contre-extraction où l'on introduit en 6, à contre-courant, une solution aqueuse d'acide chlorhydrique 7 N à un débit de 360 litres/heure.

On recueille à l'entrée de la section C de contre-extraction, en 7, une solution aqueuse de chlorures de terres rares ayant une concentration exprimée en oxydes de terres rares de 350 g/l.

La teneur en plomb dans la solution aqueuse de chlorures de terres rares est inférieure à 0,001 %.

La phase organique régénérée est évacuée en 8 et est recyclée à la sortie de la section C de contre-extraction dans la section A d'extraction avec le même débit.

EXEMPLE 3

L'appareillage utilisé pour la réalisation de cet exemple est identique à celui de l'exemple 1 à la différence près que la section B de lavage comporte 4 mélangeurs-décanteurs au lieu de 3.

La solution aqueuse à traiter est une solution aqueuse de chlorures de terres ayant une concentration en oxydes de terres rares de 127 g/l et contenant 0,5 % de plomb exprimé par rapport au poids d'oxydes de terres rares.

Sa concentration en ions chlorures est de 2,8 moles/litre et en ions $H^+$ de 0,5 mole/litre.

On introduit la solution aqueuse de terres rares à purifier en 1 dans la section A d'extraction à un débit de 1000 litres/heure.

On introduit parallèlement en 2, une solution aqueuse d'ammoniaque 10 N à un débit de 250 litres/heure. Cette addition permet de maintenir le pH de la solution aqueuse résultante à 3,2.

En entrée de la section A d'extraction, on introduit en 3, avec un débit de 6000 litres/heure, une phase organique constituée par le monoester éthyl-2 hexylique de l'acide éthyl-2 hexylphosphonique en solution dans du kérosène à raison d'une mole/la litre.

Ladite phase est ensuite envoyée dans la section B de lavage et l'on introduit en 4, à contre-courant une solution aqueuse d'acide chlorhydrique 2,4 N à raison de 300 litres/heure.

La phase aqueuse séparée est envoyée dans la section A d'extraction où elle est ajoutée à la phase aqueuse qui est évacuée en 5, après extraction.

On introduit la phase organique provenant de la section B de lavage dans la section C de contre-extraction où l'on introduit en 6, à contre-courant, une solution aqueuse d'acide chlorhydrique 7 N à un débit de 380 litres/heure.

On recueille à l'entrée de la section C de contre-extraction, en 7, une solution aqueuse de chlorures de terres rares ayant une concentration exprimée en oxydes de terres rares de 350 g/l.

La teneur en plomb dans la solution aqueuse de chlorures de terres rares est inférieure à 0,001 %.

La phase organique régénérée est évacuée en 8 et est recyclée à la sortie de la section C de contre-extraction dans la section A d'extraction avec le même débit.

EXEMPLE 4

On part d'une solution de chlorures de terres rares ayant une concentration exprimée en oxydes de terres rares de 135 g/l et contenant 0,5 % de plomb.

La répartition des terres rares dans cette solution est la suivante :

| $La_2O_3$ | $CeO_2$ | $Pr_6O_{11}$ | $Nd_2O_3$ |
|---|---|---|---|
| 24,7% | 50,0% | 5,5% | 19,8% |

On met en contact 100 $cm^3$ de cette solution avec 600 $cm^3$ d'un solvant constitué de monoester éthyl-2 hexylique de l'acide éthyl-2 hexylphosphonique en solution dans le kerosène, à raison d'une mole par litre.

Dans le mélange ainsi constitué, on ajoute de l'ammoniaque 10N jusqu'à obtention d'un pH donné et defini dans le tableau suivant.

Après décantation on dose les terres rares et le plomb dans chacune des phases. On peut ainsi déterminer les facteurs de séparation des différentes terres rares avec le plomb :

| pH | % de terres rares extraites | % de La extrait | % de Ce extrait | % de Pr extrait | % de Nd extrait | $F_{La/Pb}$ | $F_{Ce/Pb}$ | $F_{Pr/Pb}$ | $F_{Nd/Pb}$ |
|---|---|---|---|---|---|---|---|---|---|
| 2,0 | 87,7 % | 64,3 | 94,1 | 97,1 | 98,1 | 85 | 750 | 1570 | 2430 |
| 2,2 | 92,7 % | 78,3 | 96,9 | 98,5 | 99,0 | 155 | 1360 | 2860 | 4440 |
| 2,4 | 95,7 % | 90,0 | 98,7 | 99,4 | 99,6 | 290 | 2550 | > 5000 | > 5000 |

On note que le facteur de séparation croit lorsque le pH augmente.

## Revendications

1 - Procédé d'élimination du plomb de terres rares sous forme de chlorures, en solution aqueuse, caractérisé par le fait qu'il consiste :
- à effectuer une extraction liquide-liquide entre une phase aqueuse contenant au moins une terre rare et le plomb sous forme de chlorures et une phase organique contenant un agent d'extraction qui est constitué par un monoester phosphonique répondant à la formule (I):

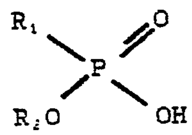

(I)

dans laquelle les groupes $R_1$ et $R_2$, identiques ou différents, sont des groupes alkyle linéaires, ramifiés ou cycliques contenant de 4 à 20 atomes de carbone,
la phase aqueuse mise en contact avec la phase organique ayant au moment de l'extraction une concentration en ions chlorure d'au moins 2 moles/litre et un pH supérieur ou égal à 2 et inférieur ou égal à 4,
- à récupérer ensuite la ou les terres rares de la phase organique, le plomb restant dans la phase aqueuse de départ.

2 - Procédé selon la revendication 1 caractérisé par le fait que le monoester phosphonique répond à la formule (I) dans laquelle $R_1$ et $R_2$ sont des groupes alkyle contenant 8 atomes de carbone.

3 - Procédé selon la revendication 2 caractérisé par le fait que le monoester phosphonique est le monoester éthyl-2 hexylique de l'acide éthyl-2 hexylphosphonique.

4 - Procédé selon l'une des revendications 1 à 4 caractérisé par le fait que la concentration en ions chlorure de la phase aqueuse est de 2 à 4 moles/litre.

5 - Procédé selon l'une des revendications 1 à 4 caractérisé par le fait que le pH de la phase aqueuse est de 2,5 à 3,5.

6 - Procédé selon l'une des revendications 1 à 5 caractérisé par le fait que la solution aqueuse de chlorures de terres rares présente une concentration exprimée en oxydes de terres rares comprise entre 20 et 500 g/l.

7 - Procédé selon la revendication 6 caractérisé par le fait que le solution aqueuse de chlorures de terres rares présente une acidité comprise entre 0,01 N et 3,0 N.

8 - Procédé selon l'une des revendications 1 à 7 caractérisé par le fait que la phase organique comporte en outre au moins un diluant organique choisi parmi le groupe constitué par les hydrocarbures aliphatiques, les coupes pétrolières du type kérosène ou constituées de mélange d'alkylbenzènes, les hydrocarbures aromatiques, les hydrocarbures halogénés.

9 - Procédé selon la revendication 1 caractérisé par le fait que le concentration du monoester phosphonique dans la phase organique est comprise entre 5 et 100 % du volume de la phase organique.

10 - Procédé selon la revendication 1 caractérisé par le fait que la concentration du monoester éthyl-2 hexylique de l'acide éthyl-2 hexylphosphonique dans la phase organique est de 0,5 à 3 moles/litre.

11 - Procédé selon la revendication 10 caractérisé par le fait que la concentration du monoester éthyl-2 hexylique de l'acide éthyl-2 hexylphosphonique de la phase organique est de 1 à 2 moles/litre.

12 - Procédé selon l'une des revendications 1 à 11 caractérisé par le fait que la phase organique comporte en outre au moins un agent modifieur choisi parmi le groupe constitué par les composés à fonction alcool, les esters phosphoriques, les esters phosphoniques, les oxydes de phosphine, les sulfoxydes.

13 - Procédé selon la revendication 12 caractérisé par le fait que la concentration de l'agent modifieur dans la phase organique est comprise entre 3 et 20 % du volume de la phase organique.

14 - Procédé selon l'une des revendications 1 et 5 caractérisé par le fait que la concentration en ions $H^+$ de la phase aqueuse est ajustée par ajout d'ammoniaque.

15 - Procédé selon l'une des revendications 1 à 14 caractérisé par le fait que la température d'extraction se situe entre 10°C et 50°C.

16 - Procédé selon l'une des revendications 1 à 15 caractérisé par le fait que l'on procède après l'étape d'extraction, à une opération de lavage de la phase organique à l'aide d'une solution aqueuse contenant des ions chlorure à une concentration d'au moins 1 mole/litre.

17 - Procédé selon la revendication 16 caractérisé par le fait que la solution de lavage est une solution aqueuse chlorhydrique.

18 - Procédé selon la revendication 16 caractérisé par le fait que la solution de lavage est une solution aqueuse de chlorure d'ammonium ayant un pH inférieur ou égal à 1.

19 - Procédé selon la revendication 16 caractérisé par le fait que la solution de lavage est une solution aqueuse de chlorures de terres rares.

20- Procédé selon l'une des revendications 1 à 9 caractérisé par le fait que l'on procède après les étapes d'extraction et de lavage successives suivies par une séparation de la phase aqueuse et de la phase organique à une étape de contre-extraction des terres rares du solvant d'extraction par mise en contact de la phase organique avec une solution aqueuse acide.

21 - Procédé selon la revendication 20 caractérisé par le fait que la solution aqueuse acide est une solution aqueuse d'acide chlorhydrique.

22 - Procédé selon l'une des revendications 20 et 21 caractérisé par le fait que la concentration de la solution aqueuse acide est comprise entre 0,5 N et 10 N.

23 - Procédé selon la revendication 22 caractérisé par le fait que la concentration de la solution aqueuse acide est comprise entre 5 et 8 N.

## Claims

1. A process for the removal of lead from rare earth elements in the form of chlorides in aqueous solution characterised in that it comprises:

– carrying out a liquid-liquid extraction operation between an aqueous phase containing at least one rare earth element and lead in the form of chlorides and an organic phase containing an extraction agent which is formed by a phosphonic monoester corresponding to formula (I):

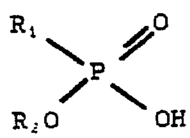

(I)

in which the groups $R_1$ and $R_2$ which are identical or different are straight, branched or cyclic alkyl groups containing from 4 to 20 carbon atoms, the aqueous phase which is brought into contact with the organic phase having at the time of the extraction operation a concentration in respect of chloride ions of at least 2 moles/litre and a pH-value which is higher than or equal to 2 and lower than or equal to 4, and

– then recovering the rare earth element or elements from the organic phase, the lead remaining in the starting aqueous phase.

2. A process according to claim 1 characterised in that the phosphonic monoester corresponds to the formula (I) in which $R_1$ and $R_2$ are alkyl groups containing 8 carbon atoms.

3. A process according to claim 2 characterised in that the phosphonic monoester is the 2-ethylhexyl monoester of 2-ethylhexylphosphonic acid.

4. A process according to one of claims 1 to 3 characterised in that the level of concentration of chloride ions in the aqueous phase is from 2 to 4 moles/litre.

5. A process according to one of claims 1 to 4 characterised in that the pH-value of the aqueous phase is from 2.5 to 3.5.

6. A process according to one of claims 1 to 5 characterised in that the aqueous solution of chlorides of rare earth elements has a level of concentration expressed in terms of oxides of rare earth elements of between 20 and 500 g/l.

7. A process according to claim 6 characterised in that the aqueous solution of chlorides of rare earth elements has a degree of acidity of between 0.01 N and 3.0 N.

8. A process according to one of claims 1 to 7 characterised in that the organic phase further comprises at least one organic diluent selected from the group formed by aliphatic hydrocarbons, petroleum cuts of the kerosene type or formed by a mixture of alkyl benzenes, aromatic hydrocarbons and halogenated hydrocarbons.

9. A process according to claim 1 characterised in that the level of concentration of phosphonic monoester in the organic phase is between 5 and 100% of the volume of the organic phase.

10. A process according to claim 1 characterised in that the level of concentration of the 2-ethylhexyl monoester of 2-ethylhexylphosphonic acid in the organic phase is from 0.5 to 3 moles/litre.

11. A process according to claim 10 characterised in that the level of concentration of the 2-ethylhexyl monoester of 2-ethylhexylphosphonic acid in the organic phase is from 1 to 2 moles/litre.

12. A process according to one of claims 1 to 11 characterised in that the organic phase further comprises at least one modifier agent selected from the group formed by compounds with an alcohol function, phosphoric esters, phosphonic esteres, phosphine oxides and sulphoxides.

13. A process according to claim 12 characterised in that the level of concentration of the modifier agent in the organic phase is between 3 and 20% of the volume of the organic phase.

14. A process according to one of claims 1 and 5 characterised in that the level of concentration of $H^+$ ions in the aqueous phase is adjusted by the addition of ammonia.

15. A process according to one of claims 1 to 14 characterised in that the extraction temperature is between 10°C and 50°C.

16. A process according to one of claims 1 to 15 characterised in that, after the extraction step, there is performed an operation for washing of the organic phase by means of an aqueous solution containing chloride ions at a level of concentration of at least 1 mole/litre.

17. A process according to claim 16 characterised in that the washing solution is an aqueous hydrochloric acid.

18. A process according to claim 16 characterised in that the washing solution is an aqueous solution of ammonium chloride with a pH-value of lower than or equal to 1.

19. A process according to claim 16 characterised in that the washing solution is an aqueous solution of chlorides of rate earth elements.

20. A process according to one of claims 1 to 19 characterised in that after the successive extraction and washing steps followed by separation of the aqueous phase and the organic phase there is effected a step for counter-extraction of the rare earth elements from the extraction solvent by contacting the organic phase with an aqueous acid solution.

21. A process according to claim 20 characterised in that the aqueous acid solution is an aqueous solution of hydrochloric acid.

22. A process according to one of claims 20 and 21 characterised in that the level of concentration of the aqueous acid solution is between 0.5 and 10 N.

23. A process according to claim 22 characterised in that the level of concentration of the aqueous acid solution is between 5 and 8 N.

**Patentansprüche**

1. Verfahren zur Entfernung von Blei aus Seltenerdmetallen in Form von Chloriden in wäßriger Lösung, dadurch gekennzeichnet, daß es besteht aus:

- der Durchführung einer Flüssig-Flüssig-Extraktion zwischen einer wäßrigen Phase, die mindestens ein Seltenerdmetall und Blei in Form von Chloriden enthält und einer organischen Phase, die ein Extraktionsmittel enthält, das aus einem Phosphonsäuremonoester der Formel (I)

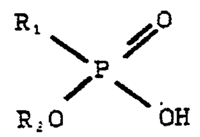

(I)

besteht, worin die Gruppen $R_1$ und $R_2$, die identisch oder verschieden sind, 4 bis 20 Kohlenstoffatome enthaltende geradkettige, verzweigte oder cyclische Alkylgruppen sind, wobei die mit der organischen Phase zum Zeitpunkt der Extraktion eine Chloridionen-Konzentration von mindestens 2 mol/Liter und einen pH-Wert größer oder gleich 2 und kleiner oder gleich 4 hat,

- der anschließenden Wiedergewinnung des oder der Seltenerdmetalle der organischen Phase, wobei das Blei in der wäßrigen Ausgangsphase verbleibt.

2. Verfahren nach Anspruch 1, dadurch gekennzeichnet, daß der Phosphonsäuremonoester der Formel (I) entspricht, worin $R_1$ und $R_2$ Kohlenstoffatome enthaltende Alkylgruppen sind.

3. Verfahren nach Anspruch 2, dadurch gekennzeichnet, daß der Phosphonsäuremonoester der 2-Ethylhexylmonoester der 2-Ethylhexylphosphonsäure ist.

4. Verfahren nach einem der Ansprüche 1 bis 3, dadurch gekennzeichnet, daß die Chlorid-Ionenkonzentration der wäßrigen Phase 2 bis 4 mol/Liter beträgt.

5. Verfahren nach einem der Ansprüche 1 bis 4, dadurch gekennzeichnet, daß der pH-Wert der wäßrigen Phase 2,5 bis 3,5 beträgt.

6. Verfahren nach einem der Ansprüche 1 bis 5, dadurch gekennzeichnet, daß die wäßrige Lösung der Seltenerdmetallchloride eine Konzentration, ausgedrückt in Seltenerdoxiden, zwischen 20 und 500 g/Liter aufweist.

7. Verfahren nach Anspruch 6, dadurch gekennzeichnet, daß die wäßrige Lösung der Seltenerdmetallchloride eine Acidität zwischen 0,01 und 3,0 N aufweist.

8. Verfahren nach einem der Ansprüche 1 bis 7, dadurch gekennzeichnet, daß die organische Phase des weiteren mindestens ein organisches Verdünnungsmittel enthält, das aus der durch die aliphatischen Kohlenwasserstoffe, die Erdölschnitte vom Kerosin-Typ oder jene, die aus einem Gemisch aus Alkylbenzolen gebildet sind, die aromatischen Kohlenwasserstoffe und die halogenierten Kohlenwasserstoffe gebildeten Gruppe ausgewählt ist.

9. Verfahren nach Anspruch 1, dadurch gekennzeichnet, daß die Phosphonsäuremonoester-Konzentration in der organischen Phase zwischen 5 und 100 Vol.% der organischen Phase beträgt.

10. Verfahren nach Anspruch 1, dadurch gekennzeichnet, daß die Konzentration des 2-Ethylhexyl-Monoesters der 2-Ethylhexylphosphonsäure in der organischen Phase 0,5 bis 3 mol/Liter beträgt.

11. Verfahren nach Anspruch 10, dadurch gekennzeichnet, daß die Konzentration des 2-Ethylhexyl-Monoesters der 2-Ethylhexylphosphonsäure in der organischen Phase 1 bis 2 mol/Liter beträgt.

12. Verfahren nach einem der Ansprüche 1 bis 11, dadurch gekennzeichnet, daß die organische Phase darüber hinaus ein Modifikationsmittel enthält, das aus der von den Verbindungen mit funktionellen Alkoholgruppen, den Phosphorsäureestern, den Phosphonsäureestern, den Phosphinoxiden und den Sulfoxiden gebildeten Gruppe ausgewählt ist.

13. Verfahren nach Anspruch 12, dadurch gekennzeichnet, daß die Konzentration des Modifikationsmittels in der organischen Phase zwischen 3 und 20 Vol.% der organischen Phase beträgt.

14. Verfahren nach Anspruch 1 oder 5, dadurch gekennzeichnet, daß die Wasserstoffionen-Konzentration in der wäßrigen Phase durch Ammoniakzugabe eingestellt wird.

15. Verfahren nach einem der Ansprüche 1 bis 14, dadurch gekennzeichnet, daß die Extraktionstemperatur zwischen 10°C und 50°C beträgt.

16. Verfahren nach einem der Ansprüche 1 bis 15, dadurch gekennzeichnet, daß man nach dem Extraktionsschritt einen Waschprozeß der organischen Phase mittels einer wäßrigen Lösung, die Chloridionen einer Konzentration von mindestens 1 mol/Liter enthält, durchführt.

17. Verfahren nach Anspruch 16, dadurch gekennzeichnet, daß die Waschlösung eine wäßrige Salzsäurelösung ist.

18. Verfahren nach Anspruch 16, dadurch gekennzeichnet, daß die Waschlösung eine wäßrige Ammoniumchloridlösung mit einem pH-Wert kleiner oder gleich 1 ist.

19. Verfahren nach Anspruch 16, dadurch gekennzeichnet, daß die Waschlösung eine wäßrige Seltenerdmetallchlorid-Lösung ist.

20. Verfahren nach einem der Ansprüche 1 bis 19, dadurch gekennzeichnet, daß man nach den Schritten Extraktion und anschließendem Waschen, gefolgt von einer Trennung der wäßrigen und der organischen Phase, einen Gegenextraktionsschritt der Seltenerdmetalle aus dem Extraktionslösungsmittel durch Kontaktieren der organischen Phase mit einer wäßrigen Säurelösung durchführt.

21. Verfahren nach Anspruch 20, dadurch gekennzeichnet, daß die wäßrige Säurelösung eine wäßrige Salzsäurelösung ist.

22. Verfahren nach Anspruch 20 oder 21, dadurch gekennzeichnet, daß die Konzentration der wäßrigen Säurelösung zwischen 0,5 N und 10 N beträgt.

23. Verfahren nach Anspruch 22, dadurch gekennzeichnet, daß die Konzentration der wäßrigen Säurelösung zwischen 5 und 8 N beträgt.

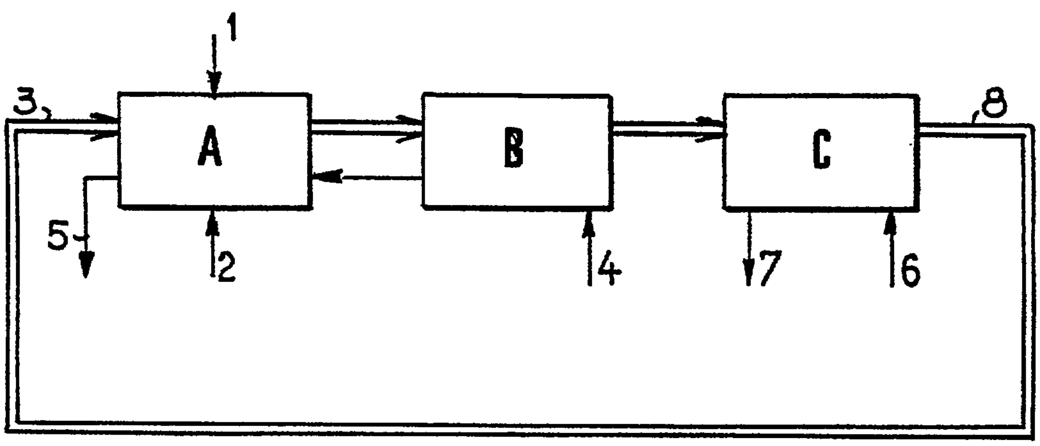
1
3
A
B
C
8
5
2
4
7
6